# EUROPEAN PATENT SPECIFICATION

(11) **EP 3 747 701 B1**
(45) Date of publication and mention of the grant of the patent: **15.12.2021**
(21) Application number: 19178643.3
(22) Date of filing: 06.06.2019
(51) Int. Cl.: B60R 7/02, B60R 13/01

(54) **FLOOR ASSEMBLY FOR A VEHICLE LUGGAGE COMPARTMENT AND VEHICLE LUGGAGE COMPARTMENT FLOOR**
BODENANORDNUNG FÜR EINEN FAHRZEUGGEPÄCKRAUM UND FAHRZEUGGEPÄCKRAUMBODEN
ENSEMBLE DE PLANCHER POUR UN COMPARTIMENT À BAGAGES D'UN VÉHICULE ET PLANCHER DE COMPARTIMENT À BAGAGES D'UN VÉHICULE

(43) Date of publication of application: 09.12.2020
(73) Proprietor: Ford Global Technologies, LLC, Dearborn, MI 48126 (US)
(72) Inventor: Voss, Carsten, 50259 Pulheim (DE); Betz, Christian, 42655 Solingen (DE); Demirci, Oguzhan, Körfez/Kocaeli (TR); Merino, Angela, 40213 Düsseldorf (DE); Dargel, Robin, 50769 Köln (DE); Hellriegel, Matthias, 45473 Mülheim an der Ruhr (DE)
(74) Representative: Dörfler, Thomas

(56) References cited:
- EP-A1- 1 164 056
- JP-A- 2009 214 859
- US-A1- 2003 015 531
- US-A1- 2009 218 849
- US-A1- 2017 274 829

## Description

The invention relates to a floor assembly for a vehicle luggage compartment. Moreover, the invention relates to a vehicle luggage compartment floor, comprising at least one floor element.

A cover panel disclosed in EP 1 164 056 A1 for a load surface of a vehicle has a bottom surface positioned facing the load surface, a supporting surface on the opposite side to the bottom surface, and at least one supporting member interposed between the bottom surface and the supporting surface. Said supporting member made of self-supporting foam material. EP 1 164 056 A1 discloses a floor assembly according to the preamble of claim 1.

US 2003 / 015 531 A1 describes a cargo floor, which is supported above a tray in a vehicle storage area in spaced relationship thereto. The cargo floor has one or more removable panels. Each panel has opposed planar surfaces which are textured differently to provide different holding features. In one embodiment, apertures are formed through the panels to allow water from wet objects to drain into the supporting tray. The apertures may be in the form of conical projections which present a smooth surface with drain apertures on one side and, on the other side, upwardly projecting truncated cones.

To provide a cargo loading structure capable of fixing a cargo when loading the large cargo by using a vehicle body upper space in the rear of a cabin, in a vehicle in which a cabin opened to the outside and its rear vehicle body upper space are continued, JP 2009 214 859 A proposes a roll bar arranged on a vehicle body upper surface in the rear of the cabin. The vehicle body upper space in the rear of the cabin can be used as a cargo loading space. The roll bar is provided with a cargo fixing member (a cargo fixing means) for fixing the cargo loaded in the space.

Passengers of vehicles often have wet and/or dirty objects, e. g. shoes, to be stowed in a vehicle luggage compartment. There are different solutions known to prevent the interior of a luggage compartment from being soiled and/or damaged by accommodated wet and/or dirty objects. For example, it is known to cover a floor of a luggage compartment with a plastic tray, so that wet and/or dirty objects can be stored on the tray without contacting another part of the luggage compartment.

It is an object of the invention to provide a novel and better solution for stowing wet and/or dirty objects in a vehicle luggage compartment.

According to the invention this object is solved by a floor assembly with the features according to claim 1. The floor assembly for a vehicle luggage compartment comprises at least one basket for accommodating at least one wet and/or dirty object, at least one tray-like waterproof recess formed in or arranged at a floor element of the luggage compartment and completely accommodating the basket, and at least one waterproof lid, wherein the recess is completely covered by the lid, such that the lid constitutes a part of a floor of the luggage compartment.

It is pointed out that individual features and measures specified in the following description can be combined with each other in arbitrary technical reasonable way and can disclose further embodiments of the invention. The description characterizes an specifies the invention additionally in particular together with the figures.

According to the invention a person can stow at least one wet and/or dirty object, e. g. shoes, in the floor assembly without soiling or damaging other parts of the luggage compartment, because the wet and/or dirty object does not get in physical contact with the other parts of the luggage compartment.

To stow at least one wet and/or dirty object in the floor assembly a person uncovers the recess by simply removing the lid at least partly from the recess. Afterwards the person puts the wet and/or dirty object in the basket. At least the person covers the recess again with the lid. If the person wants to remove the object from the floor assembly again the person uncovers the recess by removing the lid at least partly from the recess, removes the object from the basket and covers the recess again with the lid.

Water and/or mud adhering to the object can drain off from the object and thereafter from the basket and can be collected by the recess. Through this the object can dry to a certain extend within the floor assembly. Also dry dirt adhering to the object can fall off the object and through the basket into the recess. The effect of separating water and/or mud and/or dry dirt from the object contained in the floor assembly may be enhanced when the vehicle drives, because vibrations caused during the drive operation may lead to scrubbing movements of the object relative to the basket, so that adhering subject matter can be scrubbed off the object by means of the basket.

The basket may e. g. be big enough to accommodating at least one pair of shoes. The basket may be manufactured partly or completely from a natural material, a plastic material, a metallic material or a compound material. The basket may comprise a plurality of through holes in side walls and/or a base wall of the basket.

The recess may be integrally formed in the floor element and accordingly may be a part of the floor element. Alternatively the recess may be manufactured separately from the floor element and may be arranged at a floor element. Thereby the recess may be fixed to the floor element or may be in a loose contact with the floor element. That the recess is tray-like means that the recess serves as a drain tray for collecting subject matter falling off the wet and/or dirty object contained in the basket. The recess is waterproof so that water and/or mud contained in the recess cannot drain uncontrolled from the recess. The recess may be manufactured partly or completely from a natural material, a plastic material, a metallic material or a compound material.

The lid is able to completely cover the recess containing the basket. Preferably an upper side of the lid is aligned with an upper side of the floor element. At least one handle may be arranged on the upper side of the lid such that a person can actuate the lid by means of the handle. The floor assembly may comprise at least one manually solvable fixation unit for fixing the lid in its closure position to the recess and/or the floor element. Because the lid is waterproof it prevents that moisture and/or odor leaves the recess and enters the luggage compartment. Preferably the lid in its closure position sealingly covers the recess. The lid may be manufactured partly or completely from a natural material, a plastic material, a metallic material or a compound material.

According to an advantageous embodiment a bottom wall of the recess is at least partly inclined with respect to the lid. Through this the recess may have a bigger volume for receiving subject matter falling/dripping off the object contained in the basket. Additionally, subject matter that has fallen/dripped off the object congregates in a deeper part of the recess. A part of the bottom wall or the complete bottom wall may be inclined with respect to the planar lid.

According to a further advantageous embodiment the recess comprises at least one drain hole. Preferably the drain hole is arranged in the bottom wall of the recess. If the bottom wall of the recess is at least partly inclined with respect to the lid the drain hole is preferably positioned at the deepest part of the bottom wall. The drain hole makes it possible to clean the recess after use with water by water rinsing or hosing. The water used in this way for cleaning the recess can drain off the recess through the drain hole, especially by force of gravity. The recess may comprise two or more drain holes.

According to a further advantageous embodiment the recess comprises at least one closure removably arranged at the drain hole and closing the drain hole. The drain hole can be closed with the closure when the vehicle is driving or parking to prevent water and/or mud from draining off the recess. The drain hole may be opened by manually removing the closure only when a person wants to clean the recess.

According to a further advantageous embodiment the lid is freely removable from the recess or is hinged to the recess. In the first alternative the lid may close the recess by simply lying on the recess under force of gravity. In the second alternative the lid is coupled to the recess by at least one hinge. Additionally, a form fit may exist between the lid and the recess to prevent movement between the lid and the recess when the vehicle is driving.

According to the invention at least one side wall of the recess comprises at least one support element extending inwardly from the side wall, and the basket comprises at least one support element extending laterally outwards from the basket and lying on the support element of the recess. Through this, the basket can be prevented from contacting the bottom wall of the recess. Thereby, more space for receiving water and/or mud and/or dry dirt exists under the basket in the recess. The basket may be hooked in the recess by one, two or more pairs of support elements distributed circumferentially along the recess and the basket.

The above object is further solved by a vehicle luggage compartment floor according to claim 6, comprising at least one floor assembly according to one of the preceding embodiments or a combination of at least two of these embodiments with each other, wherein the floor element and the lid constituting at least a part of a loading floor of the luggage compartment.

The advantages mentioned above with respect to the floor assembly are correspondingly accompanied with the vehicle luggage compartment floor. The floor element may be a bottom lining element of the luggage compartment. The floor element and the lid constituting a part of a loading floor of the luggage compartment or the entire loading floor.

Further advantageous embodiments of the invention are disclosed in the dependent claims and in the following description of the figures. It shows
- Fig. 1: a schematic and perspective view of an embodiment of the inventive floor assembly,
- Fig. 2: a schematic and perspective view of the floor assembly shown in Fig. 1 integrated in a vehicle luggage compartment and
- Fig. 3: a schematic longitudinal section of the vehicle luggage compartment shown in Fig. 2.

In the different figures like parts are provided with same reference signs, so that generally these parts are described only once.

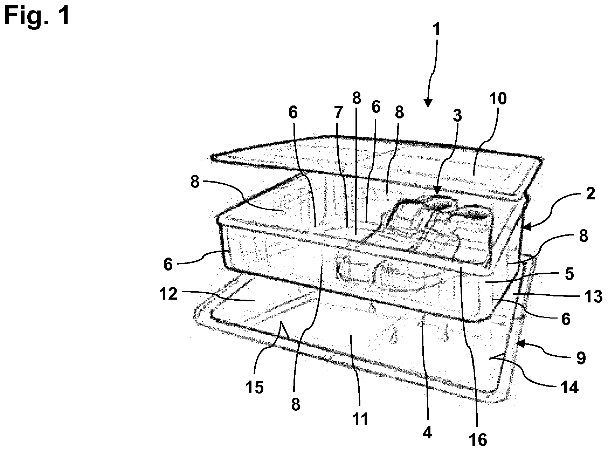

Fig. 1 shows a schematic and perspective view of an embodiment of the inventive floor assembly 1 for a vehicle luggage compartment (not shown in Fig. 1).

The floor assembly 1 comprises a basket 2 accommodating a wet and/or dirty object 3 in form of a pair of shoes. Water and/or mud dropping from the shoes through the basket 2 is indicated by drops 4. The basket 2 comprises a frame structure 5 with side windows 6 and a bottom window 7. Each window 6 and 7 comprises a net structure 8 which is permeable for water and air.

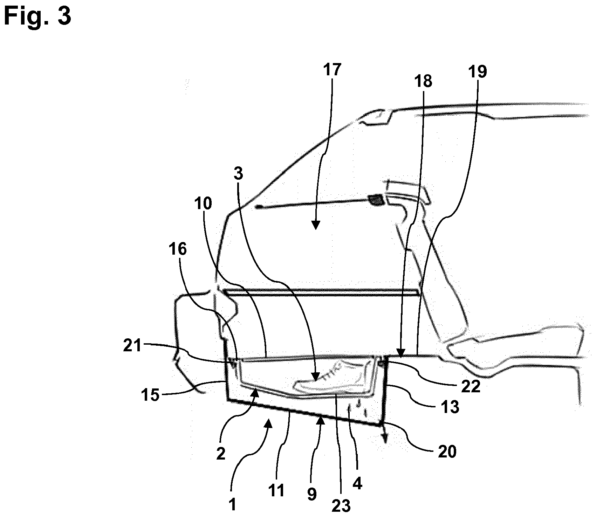

Further, the floor assembly 1 comprises a tray-like waterproof recess 9 formed in or arranged at a floor element (not shown in Fig. 1) of the luggage compartment and being suitable for completely accommodating the basket 2, as shown in Fig. 3. The recess 9 comprises a drain hole (not shown in Fig. 1). Moreover, the recess 9 comprises a closure (not shown) removably arranged at the drain hole and closing the drain hole.

Additionally, the floor assembly 1 comprises a waterproof lid 10. The recess 9 can be partly or completely covered by the lid 10, such that the lid 10 constitutes a part of a floor (not shown in Fig. 1) of the luggage compartment. A bottom wall 11 of the recess 9 is completely inclined with respect to the lid. The lid 10 is freely removable from the recess 9 or is hinged to the recess 9.

At least one side wall 12, 13, 14 or 15 of the recess 9 comprises at least one support element (not shown in Fig. 1) extending inwardly from the side wall 12, 13, 14 or 15. The basket 2 comprises a support element 16 extending laterally outwards from the basket 2 and suitable to be borne on the support element of the recess 9. The support element 16 is formed as a circumferentially arranged collar at the upper side of the basket 2.

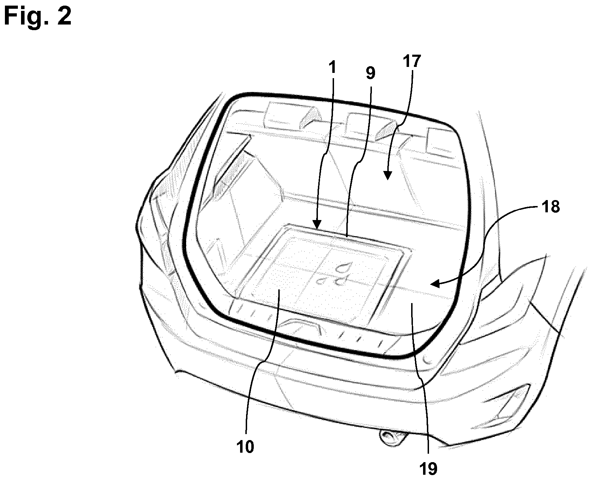

Fig. 2 shows a schematic and perspective view of the floor assembly 1 shown in Fig. 1 integrated in a vehicle luggage compartment 17. The lid 10 closes an object accommodating compartment (not shown in Fig. 2) of the recess (not shown in Fig. 2). A vehicle luggage compartment floor 18 comprises a floor element 19, wherein the floor element 19 and the lid 10 constituting a loading floor of the luggage compartment 17.

Fig. 3 shows a schematic longitudinal section of the vehicle luggage compartment 17 shown in Fig. 2. Fig. 3 shows how the bottom wall 11 of the recess 9 is inclined with respect to the lid 10 closing the recess 9. Further, Fig. 3 shows the drain hole 20 of the recess 9. The drain hole 20 is arranged at the deepest part of the bottom wall 11. Furthermore, Fig. 3 shows support elements 21 and 22 arranged on the side wall 15 and 13, respectively, extending inwardly from the side wall 15 and 13, respectively, and supporting the support element 16 of the basket 2 and therefore the whole basket 2. A bottom wall 23 of the basket 2 runs partly parallel to the lid 10 and is partly inclined with respect to the lid 10.

### Reference signs:

- 1: floor assembly
- 2: basket
- 3: object
- 4: drop (water/mud)
- 5: frame structure of 2
- 6: side window of 5
- 7: bottom window of 5
- 8: net structure of 2
- 9: recess
- 10: lid
- 11: bottom wall of 9
- 12: side wall of 9
- 13: side wall of 9
- 14: side wall of 9
- 15: side wall of 9
- 16: support element of 2
- 17: vehicle luggage compartment
- 18: vehicle luggage compartment floor
- 19: floor element of 18
- 20: drain hole of 9
- 21: support element of 9
- 22: support element of 9
- 23: bottom wall of 2

## Claims

1. Floor assembly (1) for a vehicle luggage compartment (17), comprising at least one basket (2) for accommodating at least one wet and/or dirty object (3), at least one tray-like waterproof recess (9) formed in or arranged at a floor element (19) of the luggage compartment (17) and completely accommodating the basket (2), and at least one waterproof lid (10), wherein the recess (9) is completely covered by the lid (10), such that the lid (10) constitutes a part of a loading floor of the luggage compartment (17), **characterized in, that**
at least one side wall (12, 13, 14, 15) of the recess (9) comprises at least one support element (21, 22) extending inwardly from the side wall (12, 13, 14, 15), and the basket (2) comprises at least one support element (16) extending laterally outwards from the basket (2) and lying on the support element (21, 22) of the recess (9).

2. Floor assembly (1) according to claim 1,
**characterized in that**
a bottom wall (11) of the recess (9) is at least partly inclined with respect to the lid (10).

3. Floor assembly (1) according to claim 1 or 2,
**characterized in that**
the recess (9) comprises at least one drain hole (20).

4. Floor assembly (1) according to claim 3,
**characterized in that**
the recess (9) comprises at least one closure removably arranged at the drain hole (20) and closing the drain hole (20).

5. Floor assembly (1) according to one of the preceding claims,
**characterized in that**
the lid (10) is freely removable from the recess (9) or is hinged to the recess (9).

6. Vehicle luggage compartment floor (18), comprising at least one floor element (19),
**characterized by**
at least one floor assembly (1) according to one of the preceding claims, wherein the floor element (19) and the lid (10) constituting at least a part of a loading floor of the luggage compartment (17).

## Patentansprüche

1. Bodenanordnung (1) für einen Fahrzeuggepäckraum (17), umfassend zumindest einen Korb (2) zum Aufnehmen zumindest eines nassen und/oder schmutzigen Objekts (3), zumindest eine schalenartige wasserdichte Vertiefung (9), gebildet in oder angeordnet an einem Bodenelement (19) des Gepäckraums (17) und den Korb (2) vollständig aufnehmend, und zumindest einen wasserdichten Deckel (10), wobei die Vertiefung (9) durch den Deckel (10) vollständig abgedeckt ist, sodass der Deckel (10) einen Teil eines Ladebodens des Gepäckraums (17) bildet, **dadurch gekennzeichnet, dass**
zumindest eine Seitenwand (12, 13, 14, 15) der Vertiefung (9) zumindest ein Stützelement (21, 22) umfasst, das sich von der Seitenwand (12, 13, 14, 15) einwärts erstreckt, und wobei der Korb (2) zumindest ein Stützelement (16) umfasst, das sich vom Korb (2) lateral auswärts erstreckt und auf dem Stützelement (21, 22) der Vertiefung (9) liegt.

2. Bodenanordnung (1) nach Anspruch 1,
**dadurch gekennzeichnet, dass**
eine untere Wand (11) der Vertiefung (9) bezüglich des Deckels (10) zumindest teilweise geneigt ist.

3. Bodenanordnung (1) nach Anspruch 1 oder 2,
**dadurch gekennzeichnet, dass**
die Vertiefung (9) zumindest ein Ablaufloch (20) umfasst.

4. Bodenanordnung (1) nach Anspruch 3,
**dadurch gekennzeichnet, dass**
die Vertiefung (9) zumindest einen Verschluss umfasst, der entfernbar an dem Ablaufloch (20) angeordnet ist und das Ablaufloch (20) verschließt.

5. Bodenanordnung (1) nach einem der vorhergehenden Ansprüche,
**dadurch gekennzeichnet, dass**
der Deckel (10) frei von der Vertiefung (9) entfernbar ist oder an der Vertiefung (9) angelenkt ist.

6. Fahrzeuggepäckraumboden (18), umfassend zumindest ein Bodenelement (19),
**gekennzeichnet durch**
zumindest eine Bodenanordnung (1) nach einem der vorhergehenden Ansprüche, wobei das Bodenelement (19) und der Deckel (10) zumindest einen Teil eines Ladebodens des Gepäckraums (17) bilden.

## Revendications

1. Ensemble de plancher (1) pour un compartiment à bagages (17) d'un véhicule, comprenant au moins un panier (2) destiné à recevoir au moins un objet mouillé et/ou sale (3), au moins un évidement imperméable (9) en forme de plateau formé dans ou disposé sur un élément de plancher (19) du compartiment à bagages (17) et recevant complètement le panier (2), et au moins un couvercle imperméable (10), l'évidement (9) étant complètement recouvert par le couvercle (10), de sorte que le couvercle (10) constitue une partie d'un plancher de chargement du compartiment à bagages (17),
**caractérisé en ce que**
au moins une paroi latérale (12, 13, 14, 15) de l'évidement (9) comprend au moins un élément de support (21, 22) s'étendant vers l'intérieur depuis la paroi latérale (12, 13, 14, 15), et le panier (2) comprend au moins un élément de support (16) s'étendant latéralement vers l'extérieur depuis le panier (2) et reposant sur l'élément de support (21, 22) de l'évidement (9).

2. Ensemble de plancher (1) selon la revendication 1, **caractérisé en ce que**
une paroi inférieure (11) de l'évidement (9) est au moins partiellement inclinée par rapport au couvercle (10) .

3. Ensemble de plancher (1) selon la revendication 1 ou 2,
**caractérisé en ce que**
l'évidement (9) comprend au moins un trou de drainage (20).

4. Ensemble de plancher (1) selon la revendication 3, **caractérisé en ce que**
l'évidement (9) comprend au moins une fermeture disposée de manière amovible au niveau du trou de drainage (20) et fermant le trou de drainage (20).

5. Ensemble de plancher (1) selon l'une quelconque des revendications précédentes,
**caractérisé en ce que**
le couvercle (10) peut être retiré librement de l'évidement (9) ou est relié par charnière à l'évidement (9) .

6. Plancher de compartiment à bagages de véhicule (18), comprenant au moins un élément de plancher (19),
**caractérisé par**
au moins un ensemble de plancher (1) selon l'une des revendications précédentes, l'élément de plancher (19) et le couvercle (10) constituant au moins une partie d'un plancher de chargement du compartiment à bagages (17).
